# EUROPEAN PATENT APPLICATION

(11) **EP 4 852 155 A1**
(43) Date of publication of application: **09.12.2026**
(21) Application number: 25748824.7
(22) Date of filing: 30.01.2025
(51) Int. Cl.: H01M 10/6568, H01M 10/613, H01M 10/625, H01M 10/643, H01M 10/647, H01M 10/6556, H01M 50/204, H01M 50/244

(54) **ELECTRIC POWER STORAGE MODULE**

(30) Priority: 31.01.2024 JP 2024013632; 31.01.2024 JP 2024013430
(71) Applicant: Panasonic Intellectual Property Management Co., Ltd., Kadoma-shi, Osaka 571-0057 (JP)
(72) Inventor: HIRANO, Tatsuya, Osaka 571-0057 (JP); SAWADA, Koichi, Osaka 571-0057 (JP)
(74) Representative: Eisenführ Speiser
(86) International application number: PCT/JP2025/003049
(87) International publication number: WO 2025/164734

(57) **Abstract**

This electric power storage module is characterized by comprising: a plurality of power storage devices 10; a holder 30 holding the plurality of power storage devices 10; a cooling liquid for immersing the plurality of power storage devices 10 in the holder 30; and a case 40 that has an inflow portion 47 allowing the inflow of the cooling liquid from the outside, the case 40 housing the holder 30.

## Description

### TECHNICAL FIELD

The present disclosure relates to a power storage module that houses a plurality of power storage devices.

### BACKGROUND ART

A conventional power storage module houses a plurality of power storage devices so that the power storage devices are connected in parallel and in series, obtaining a predetermined capacity and voltage. Examples of the power storage devices include secondary batteries such as lithium ion batteries, and capacitors.

In this power storage module, the power storage devices generate heat during charging and discharging or the like, and therefore, it is necessary to cool the power storage devices. In a battery pack which is a power storage module in which a battery is adopted as a power storage device and that houses a plurality of batteries, for example, a liquid immersion cooling device using fluid has been known as a cooling device (see Patent Literature 1).

### CITATION LIST

### PATENT LITERATURE

PATENT LITERATURE 1: Japanese Patent Publication No. 6256439

### SUMMARY

Here, it is required to further improve reliability of the power storage module to further improve the performance of the power storage module.

A power storage module which is an aspect of the present disclosure comprises a plurality of power storage devices, a holder that holds the plurality of power storage devices, a cooling liquid in which the plurality of power storage devices in the holder are immersed, and a case that has an inflow portion allowing the cooling liquid to flow in from an outside and houses the holder.

According to the present disclosure, the reliability of the power storage module is improved.

### BRIEF DESCRIPTION OF DRAWING

FIG. 1 is a perspective view of a battery pack which is an example of a power storage module according to an embodiment.
FIG. 2 is an exploded perspective view of a battery pack which is an example of the power storage module according to an embodiment.
FIG. 3 is an axial sectional view of a power storage device which is an example of an embodiment.
FIG. 4 is a sectional view taken along a line A-A in FIG. 1, and schematically illustrates an internal configuration of the battery pack.
FIG. 5 is a sectional view taken along a line B-B in FIG. 1, and schematically illustrates an internal configuration of the battery pack.
FIG. 6 is a sectional view taken along a line B-B in FIG. 1, and schematically illustrates an internal configuration of the battery pack.
FIG. 7 is a sectional view taken along a line C-C in FIG. 1, and illustrates an enlarged view of the vicinity of a coupling portion.
FIG. 8 is a diagram corresponding to FIG. 7 in a battery pack which is another example of the power storage module according to an embodiment.
FIG. 9 is a diagram corresponding to FIG. 6 in a battery pack which is another example of the power storage module according to an embodiment.

### DESCRIPTION OF EMBODIMENTS

With reference to the accompanying drawings, an embodiment of the present disclosure will now be described. The following embodiment does not limit the present disclosure, and the present disclosure includes a configuration resulting from selective combinations of a plurality of examples. In addition, in the present disclosure, a battery pack in which a plurality of batteries are housed in a case is adopted as an example of a power storage module.

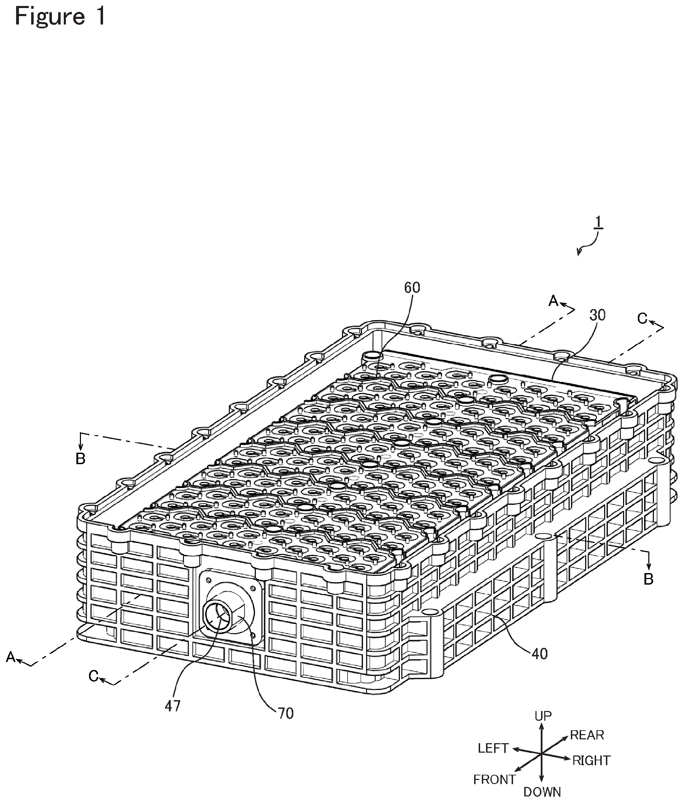

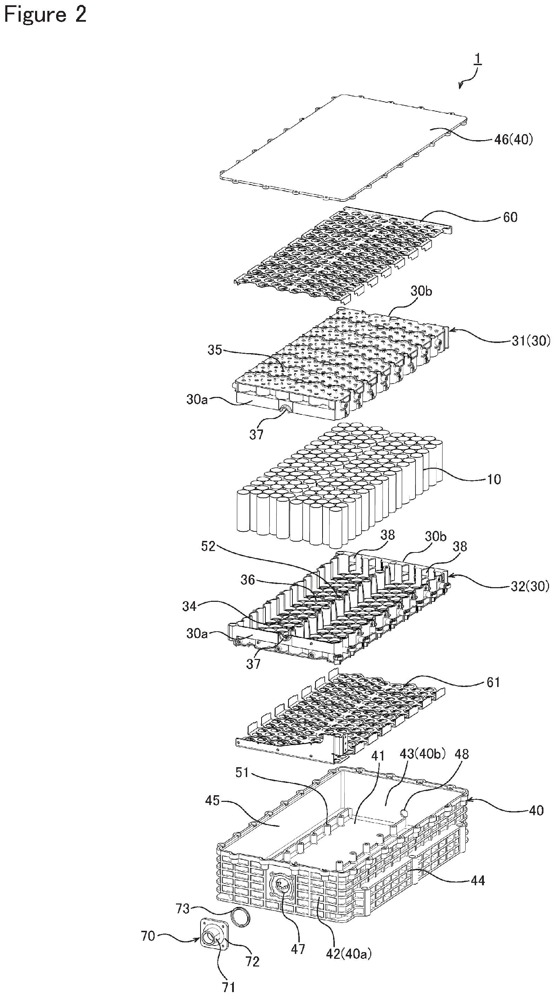

A configuration of a battery pack 1 will be described with reference to FIGS. 1 and 2. FIG. 1 is a perspective view of the battery pack 1, and FIG. 2 is an exploded perspective view of the battery pack 1. In FIG. 1, for convenience of description, an upper lid 46 of a case 40 is not illustrated.

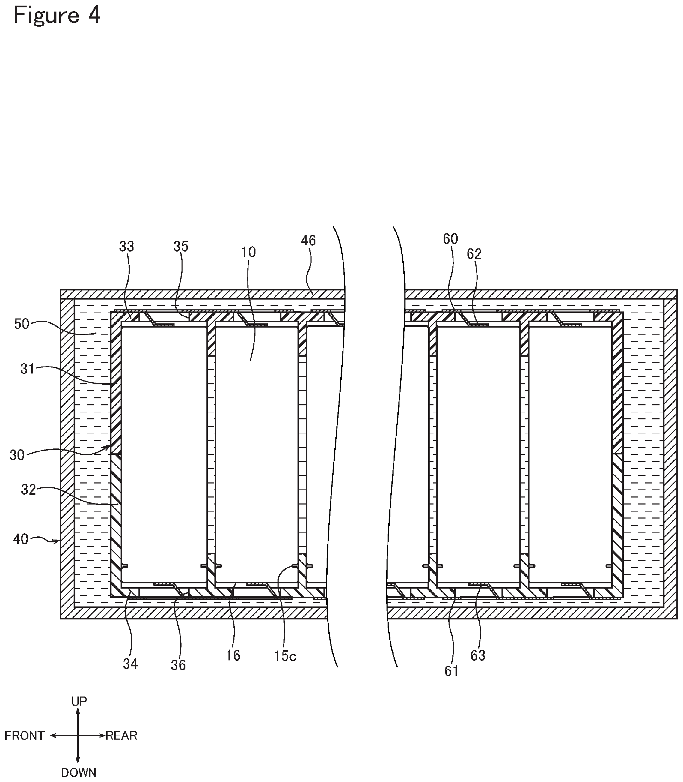

As illustrated in FIGS. 1 and 2, the battery pack 1 comprises a plurality of power storage devices 10, a holder 30 that holds the plurality of power storage devices 10, and the case 40 that houses the holder 30. The case 40 has an inflow portion 47 that allows an insulating cooling liquid 50 (see FIG. 4) to flow from the outside to the inside, and an outflow portion 48 that allows the cooling liquid 50 to flow out to the outside. Accordingly, the cooling liquid 50 is stored in the case 40, so that at least parts of the power storage devices 10 are immersed in the cooling liquid 50. In other words, the cooling liquid 50 is stored in at least parts of gaps (a gap between the power storage devices 10, and a gap between the holder 30 and the case 40) in the case 40.

Hereinafter, for convenience of description, the terms representing front-rear, up-down, and left-right directions are used for each component of the holder 30 and the case 40. The front-rear direction means a direction (first direction) in which the holder 30 and the case 40 extend. The inflow portion 47 side of the case 40 is defined as "front", and the outflow portion 48 side of the case 40 is defined as "rear". The up-down direction means a direction along the vertical direction. The left-right direction means a direction (second direction) orthogonal to the front-rear direction (first direction) in a top view of the battery pack 1. The left and right is the left and right as seen from the front side of the battery pack 1 unless otherwise noted.

The battery pack 1 is used as a power source of an electric device driven by a motor such as an electric car, an electric power tool, an electric power-assisted bicycle, an electric motorcycle, an electric wheelchair, an electric tricycle, or an electric cart. However, the application of the battery pack 1 is not limited, and the battery pack 1 may be used as a power source of various electric devices used indoors and outdoors, such as a cleaner, a wireless device, a lighting device, a digital camera, and a video camera, other than the electric device.

The power storage device 10 may be a secondary battery using an aqueous electrolyte or may be a secondary battery using a non-aqueous electrolyte. The power storage device 10 of the present disclosure may be a cylindrical battery comprising a cylindrical (for example, a bottomed cylindrical) housing can or may be a square battery comprising a square housing can. Alternatively, the power storage device 10 of the present disclosure may be a capacitor that is repeatedly charged and discharged. The case where the power storage device 10 is a cylindrical battery will be primarily described below. In the present embodiment, 160 power storage devices 10 are arranged in the holder 30.

The holder 30 has a substantially rectangular parallelepiped shape, and is formed to be one size smaller than the case 40. The holder 30 is arranged, for example, substantially in a center portion of the case 40. Accordingly, a gap is formed between the holder 30 and the case 40, and the cooling liquid 50 is stored in the gap. The holder 30 may be arranged eccentrically on one side in the case 40. At the time of abnormal heat generation or the like of the power storage device 10, gas released from the power storage devices 10 flows in the gap. The holder 30 is fixed to the case 40 by screws (not illustrated) or the like.

The holder 30 has an upper holder 31 that houses and holds upper sides (one end portions) of the power storage devices 10, and a lower holder 32 that holds lower sides (the other end portions) of the power storage devices 10. The upper holder 31 and the lower holder 32 are coupled to each other by screws (not illustrated) or the like. In addition, the upper holder 31 and the lower holder 32 have battery holding portions 33 (see FIG. 4) and 34, respectively, which are housing parts that cover and hold outer peripheral surfaces of the power storage devices 10.

The battery holding portions 33 and 34 are formed to have a circular shape as viewed in the up-down direction and to have a recessed portion (cylindrical recessed portion) as viewed in the front-rear direction and the left-right direction. A top portion of the battery holding portion 33 and a bottom of the battery holding portion 34 are provided with circular through holes 35 and 36, respectively. The through holes 35 and 36 are formed as circular holes having inner diameter smaller than circular diameters (inner diameters) of the battery holding portions 33 and 34 as viewed in the up-down direction. In addition, the through holes 35 and 36 are formed so that, as viewed in the up-down direction, centers of the battery holding portions 33 and 34 and centers of the through holes 35 and 36 coincide with each other. However, these centers may be arranged offset from each other.

A first opening portion 37 that allows the cooling liquid 50 to flow into the holder 30 is provided in a front surface 30a (first surface) of the holder 30. The first opening portion 37 is provided facing the inflow portion 47 provided in the case 40, and is provided substantially in the center portion of the front surface 30a. In addition, the first opening portion 37 has a substantially circular shape. However, the shape of the first opening portion 37 is not limited to this shape, but may be, for example, a substantially rectangular shape. Although described in detail below, the first opening portion 37 and the inflow portion 47 are coupled to each other by a coupling portion 70. Accordingly, the cooling liquid 50 having flowed in from the inflow portion 47 flows directly into the holder 30 through the first opening portion 37.

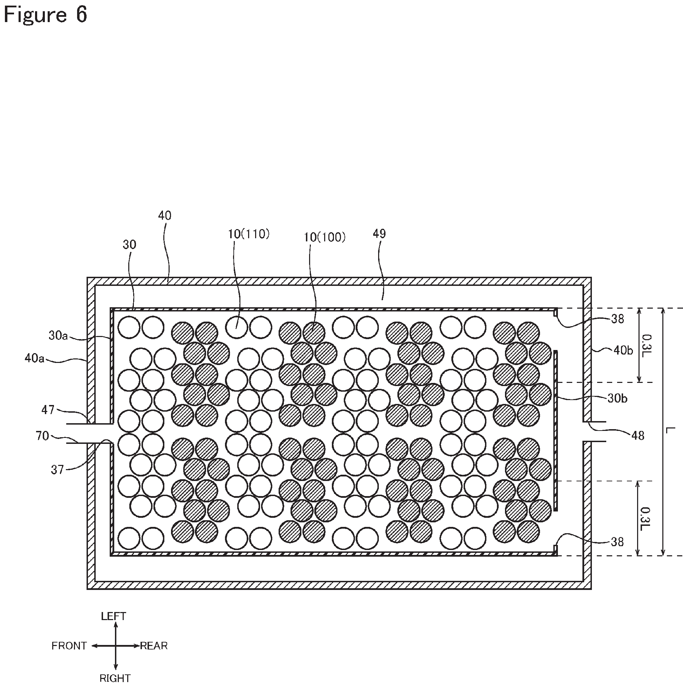

A second opening portion 38 that allows an interior of the case 40 and an interior of the holder 30 to communicate with each other is provided in a rear surface 30b (second surface) of the holder 30. The second opening portion 38 allows the cooling liquid 50 inside the holder 30 to flow out to the outside of the holder 30. Although described in detail below, the second opening portion 38 has a substantially rectangular shape in a plan view, and is formed on each end side of the rear surface 30b of the holder 30 in the left-right direction. A part of the cooling liquid 50 having flowed into the holder 30 flows to the outflow portion 48 provided in the case 40 through the second opening portion 38. In addition, a part of the cooling liquid 50 having flowed into the holder 30 flows to an outer peripheral housing chamber 49 (see FIG. 6) formed between the holder 30 and the case 40 through each second opening portion 38.

The holder 30 may be made of, for example, a high thermal conductivity polyphenylene sulfide (PPS) resin, a resin containing a heat-dissipating filler, or an injection-moldable thermosetting resin. More specifically, the holder 30 may be made of a phenol resin, an unsaturated polyester, an unsaturated polyester in which a heat absorbing agent is mixed, or the like. In addition, the holder 30 may be made of an inorganic mineral such as mica, or a material obtained by mixing an inorganic mineral such as mica in a resin material.

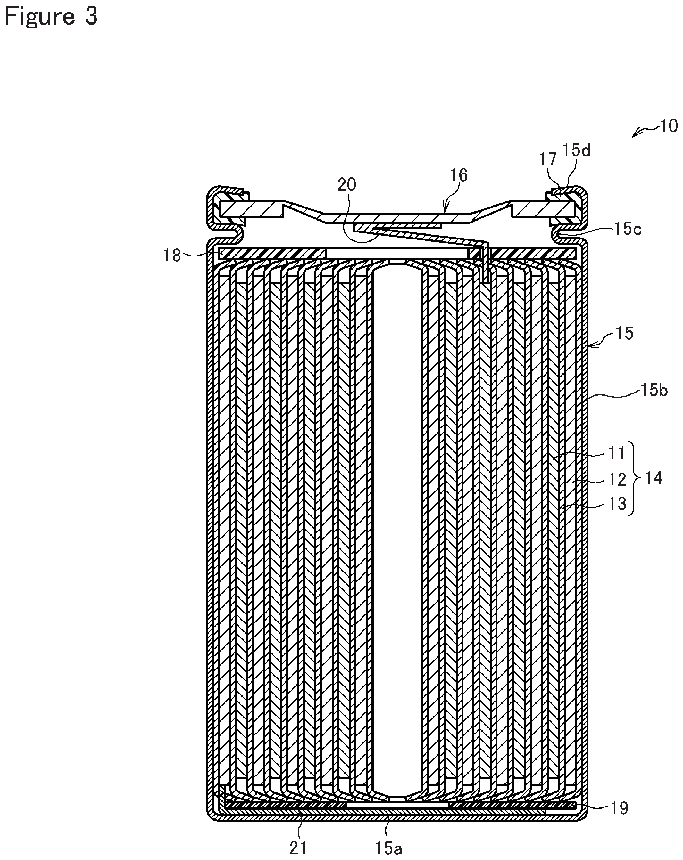

An upper current collecting plate 60 is arranged at the upper side of the holder 30, and a lower current collecting plate 61 is arranged at the lower side of the holder 30. The upper current collecting plate 60 and the lower current collecting plate 61 are made of a metal material, and are fixed to the upper holder 31 and the lower holder 32, respectively, by inserting the upper current collecting plate 60 and the lower current collecting plate 61 into respective protrusions provided on the upper holder 31 and the lower holder 32. The upper current collecting plate 60 and the lower current collecting plate 61 are electrically connected to the power storage devices 10 via leads 62 and 63 (see FIG. 4). Although described in detail below, in the present embodiment, the power storage device 10 is arranged so that a sealing assembly 16 (see FIG. 3) serving as a positive electrode terminal is directed toward the lower side. Accordingly, the upper current collecting plate 60 serves as a negative electrode terminal, and the lower current collecting plate 61 serves as the positive electrode terminal. In the battery pack 1, parallel parts in which a plurality of power storage devices are connected in parallel by each current collecting plate are connected in series in the front-rear direction. In the power storage module of the present disclosure, the direction of series connection is not limited to this direction. In addition, the upper current collecting plate 60 and the lower current collecting plate 61 have respective tongue portions each extending along a side surface of the holder from one end (one end in the left-right direction in FIG. 1) of the corresponding current collecting plate, and the tongue portions may be connected each other. At this time, the tongue portions may be connected each other or may be connected each other via another conductive member. The upper current collecting plate 60 and the lower current collecting plate 61 that are arranged on surfaces opposite to each other of the holder may be arranged collectively on one surface of the holder.

The case 40 has a substantially rectangular parallelepiped shape similarly to the holder 30, and houses the holder 30. The case 40 is made of, for example, a metal material including aluminum or a resin material. The case 40 includes a main wall 41 (bottom) that forms a lower surface and extends in the front-rear direction, side walls 42, 43, 44, and 45 that form a front surface 40a, a rear surface 40b, and right and left surfaces of the case 40, respectively, and an upper lid 46 that forms an upper surface of the case 40. The main wall 41 has a rectangular shape, and the side walls (walls) 42, 43, 44 and 45 are formed along respective edges of four sides of the main wall 41. However, the case 40 may be provided with an exhaust port (not illustrated) for discharging gas released from the power storage devices 10 to the outside of the case 40. Alternatively, in addition to the side walls 42 to 45, ribs 51 protruding vertically to an inner surface of the main wall 41 of the case 40 may be formed on the inner surface. When the holder 30 is mounted and fixed on the ribs 51, a gap is formed between a lower portion of the holder 30 and the main wall 41, so that the cooling liquid 50 can also be filled in this gap. When an exhaust vent is formed in a sealing plate of the power storage device 10, the gas can be efficiently discharged from the inside of the power storage device 10 through this exhaust vent. When the lower current collecting plate 61 is arranged on a bottom surface of the lower holder 32, it becomes easy to bring the lower current collecting plate 61 in contact with the cooling liquid 50, so that the power storage device 10 can be cooled by the lower current collecting plate 61.

The inflow portion 47 that allows the cooling liquid 50 to flow in from the outside is provided in the front surface 40a (side wall 42) of the case 40, and the outflow portion 48 that allows the cooling liquid 50 to flow out to the outside is provided in the rear surface 40b (side wall 43) of the case 40. In the present embodiment, the case 40 has one inflow portion 47 and one outflow portion 48. The inflow portion 47 is provided substantially in the center portion of the front surface 40a of the case 40, and the outflow portion 48 is provided substantially in the central lower side of the rear surface 40b of the case 40. Each of the inflow portion 47 and the outflow portion 48 has a substantially circular shape. In addition to the outflow portion 48, a through hole (not illustrated) for allowing a wiring tool and the like to pass therethrough may be provided in the rear surface 40b of the case 40, the wiring tool and the like being connected to the power storage device 10 or an apparatus inside the case 40. In the power storage module of the present disclosure, the outflow portion 48 need not be provided in the case 40. The inflow portion 47 may be formed at a position other than the side wall of the case 40.

The inflow portion 47 is connected with an inflow-side pipe (not illustrated) for allowing the cooling liquid 50 to flow in the inflow portion 47, and the outflow portion 48 is connected with an outflow-side pipe (not illustrated) for allowing the cooling liquid 50 to flow out of the outflow portion 48. The inflow-side pipe and the outflow-side pipe form a circulation path. Then, the cooling liquid 50 is circulated by a pump device (not illustrated) or the like and thereby circulates in the case 40. A heat exchanger such as a heat exchange fin may be provided in the circulation path. In the power storage module of the present disclosure, the cooling liquid 50 need not be circulated by the above-described circulation path.

The cooling liquid 50 is electrical insulation. This can prevent electric leakage from occurring in the plurality of power storage devices 10 via the cooling liquid 50. Examples of the cooling liquid 50 include insulating oil, transformer oil, silicone oil, and a fluorine-based inactive liquid such as hydrofluoroether.

Next, the power storage devices 10 constituting the battery pack 1 will be described with reference to FIG. 3. FIG. 3 is an axial (up-down directional) sectional view of the power storage device 10. Note that FIG. 3 illustrates the power storage device 10 with the sealing assembly 16 being located on an upper side.

As described above, the power storage device 10 is a cylindrical battery as an example. The power storage device 10 comprises an electrode assembly 14 in which a band-shaped positive electrode 11 and a band-shaped negative electrode 12 are wound with a band-shaped separator interposed therebetween, a non-aqueous electrolyte (not illustrated), a housing can 15 that houses the electrode assembly 14 and the non-aqueous electrolyte and has a bottomed cylindrical shape, and a sealing assembly 16 with which an opening portion 15d of the housing can is capped.

The power storage device 10 further comprises insulating plates 18 and 19 disposed on the upper and lower sides of the electrode assembly 14, respectively. In the example illustrated in FIG. 3, a positive electrode lead 20 joined to the positive electrode 11 extends toward the sealing assembly 16 side through a through hole in the insulating plate 18, and a negative electrode lead 21 joined to the negative electrode 12 passes along the outside of the insulating plate 19 and extends toward a bottom 15a side of the housing can 15. The positive electrode lead 20 is connected to a surface of the sealing assembly 16 on the electrode assembly 14 side by means of welding or the like, so that the sealing assembly 16 serves as a positive electrode terminal. The negative electrode lead 21 is connected to an inner surface of the bottom 15a of the housing can 15 by means of welding or the like, so that the housing can 15 serves as a negative electrode terminal.

The housing can 15 is a bottomed cylindrical container in which one side in the axial direction opens. The housing can 15 is made of, for example, a metal material including iron, aluminum, or the like. The housing can 15 has the bottom 15a, and a side surface portion 15b forming a side surface of the power storage device 10. The side surface portion 15b is a portion other than the bottom 15a in the housing can 15, and includes a grooved portion 15c, which will be described later, and the opening portion 15d.

The grooved portion 15c is a portion in which a part of the side surface portion 15b is recessed toward a radially inner side, and is annularly provided along a peripheral direction of the housing can 15. The grooved portion 15c supports the sealing assembly 16. The grooved portion 15c can be formed, for example, by annularly recessing a part of the side surface portion 15b toward a radially inner side by spinning toward a radially inner side.

In the side surface portion 15b, the opening portion 15d is a region on a side closer to an opening end portion than the grooved portion 15c, and forms an opening of the housing can 15. The opening portion 15d is bent toward a radially inner side when the sealing assembly 16 is crimped to be fixed to the housing can 15.

In the example illustrated in FIG. 3, the sealing assembly 16 is constituted of one plate-shaped member. However, a configuration of the sealing assembly 16 is not limited thereto. For example, the sealing assembly 16 may be constituted of a plurality of members. In addition, the sealing assembly 16 may have a cap that covers a top surface portion of the power storage device 10.

A gasket 17 is arranged between an outer peripheral surface of the sealing assembly 16 and an inner peripheral surface of the opening of the housing can 15. The gasket 17 is an insulating member having flexibility, and is compressed in the up-down direction while electrically insulating the sealing assembly 16 serving as the positive electrode terminal from the housing can 15 serving as the negative electrode terminal, so that the sealability inside the housing can 15 is achieved. The gasket 17 may be made of any compressible insulating material, and examples of the material include polypropylene (PP), polyphenylene sulfide (PPS), polyethylene (PE), polybutylene terephthalate (PBT), perfluoroalkoxyalkane (PFA), polytetrafluoroethylene (PTFE), and polyamide (PA).

In the example illustrated in FIG. 3, the gasket 17 is arranged between the opening end portion of the housing can 15 and the grooved portion 15c. Note that the gasket 17 may be arranged on a side closer to the electrode assembly 14 than the grooved portion 15c.

Next, an internal configuration of the battery pack 1 will be described with reference to FIG. 4. FIG. 4 is a sectional view taken along a line A-A in FIG. 1, and schematically illustrates the internal configuration of the battery pack 1.

As illustrated in FIG. 4, in the holder 30, the power storage device 10 is arranged so that the sealing assembly 16 is located on the lower side. The height of the liquid level of the cooling liquid 50 is located above the height of the gasket 17 (see FIG. 3). In the present embodiment, as described above, the gasket 17 is arranged between the opening end portion of the housing can 15 and the grooved portion 15c. Therefore, the height of the liquid level of the cooling liquid 50 is located above the grooved portion 15c. That is, the lower side than at least the grooved portion 15c of the power storage device 10 is immersed in the cooling liquid 50.

At the time of abnormal heat generation or the like of the power storage device 10, when the power storage device 10 becomes in a high temperature state, the temperature of the cooling liquid 50 located on a side of the power storage device 10 becoming high temperature also rises. At this time, the temperature of the cooling liquid 50 stored in the upper side of the case 40 tends to be higher than the temperature of the cooling liquid 50 stored in the lower side of the case 40. When the temperature of the cooling liquid 50 increases, it becomes difficult to sufficiently cool the power storage device 10. Alternatively, the cooling liquid (or vaporized gas of the cooling liquid) having a temperature greater than or equal to a predetermined temperature that is stored in the upper side of the case 40 may have a thermal influence on the power storage device 10. As a result, the temperature of the gasket 17 included in the power storage device 10 increases, which may cause melting of the gasket 17. When the gasket 17 melts, the insulation between the housing can 15 and the sealing assembly 16 cannot be ensured, and it is not preferable in terms of ensuring the reliability of the battery pack 1.

As in the present embodiment, the power storage device 10 is arranged so that the sealing assembly 16 is located on the lower side, and the height of the liquid level of the cooling liquid 50 is located above the height of the gasket 17, so that the cooling liquid increased in temperature can be separated from the gasket 17. Therefore, at the time of abnormal heat generation of the power storage device 10, the gasket 17 can be easily cooled, making it possible to reduce melting of the gasket 17. This makes it possible to improve the reliability of the battery pack 1. Since the cooling liquid 50 is arranged in a gap between the holder 30 and the main wall 41, an amount of the cooling liquid arranged around the gasket 17 can be increased, and the temperature of the cooling liquid near the gasket 17 is unlikely to rise.

The height of the liquid level of the cooling liquid 50 is preferably located above the height of the electrode assembly 14, and the upper side with respect to the height of the power storage device 10, that is, the entirety of the power storage device 10 is preferably immersed in the cooling liquid 50. When the height of the liquid level of the cooling liquid 50 is increased, the gasket 17 can be further cooled, and the reliability of the battery pack 1 can be improved. However, in the example illustrated in FIG. 4, the cooling liquid 50 is filled over the inside of the case 40. When the cooling liquid 50 is filled over the inside of the case 40, the gasket 17 can be further cooled, and the reliability of the battery pack 1 can be improved.

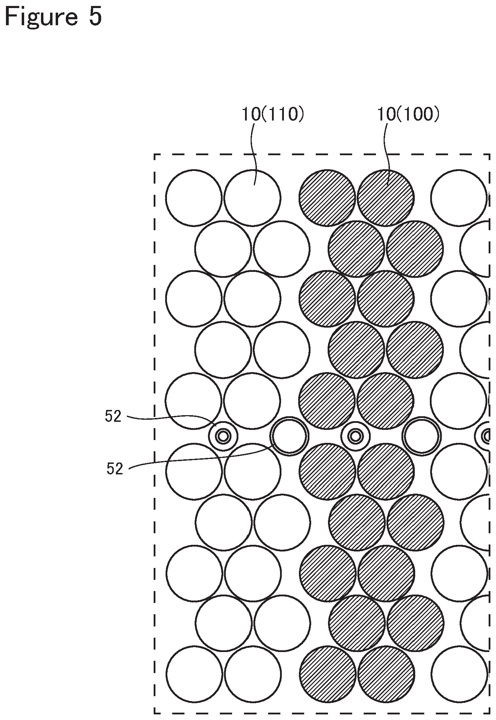

Next, an example of the arrangement of the power storage devices 10 and the holder 30 in the case 40 will be described with reference to FIGS. 5 and 6. FIGS. 5 and 6 each are a sectional view taken along a line B-B in FIG. 1, and schematically illustrate an internal configuration of the battery pack 1. Note that in FIGS. 5 and 6, the power storage devices 10 included in a first power storage device group 100, which will be described later, are indicated by hatching, and the power storage devices 10 included in a second power storage device group 110 are indicated by non-hatching.

As illustrated in FIGS. 5 and 6, among a plurality of power storage devices 10 arranged in the holder 30, an interval between a pair of power storage devices 10 adjacent to each other may be larger than an interval between a different pair of power storage devices 10 adjacent to each other. That is, among these plurality of power storage devices 10, the intervals between the power storage devices 10 are not uniform, and therefore, the power storage devices 10 may be unevenly distributed in the holder 30. This makes it possible to provide an appropriate gap between the power storage devices 10, and easy to allow the cooling liquid 50 having flowed into the holder 30 to flow in the holder 30, so that the power storage devices 10 can be efficiently cooled.

In the example illustrated in FIG. 5, a plurality of columns of power storage devices 10 arranged in the left-right direction of the battery pack 1 are formed in the holder 30, and the plurality of columns are arranged in the front-rear direction of the battery pack 1. The first power storage device group 100 and the second power storage device group 110 that are constituted of some columns among the plurality of columns are arranged side by side in the above-described front-rear direction (first direction). In each of the first power storage device group 100 and the second power storage device group 110, the power storage devices 10 are arranged via gaps (first gaps) having a predetermined interval. A gap (second gap) having an interval larger than the above-described interval between the power storage devices 10 is provided between the first power storage device group 100 and the second power storage device group 110 in the front-rear direction. This second gap may communicate with the first gaps. The presence of this second gap enables the cooling liquid in each first gap to be merged at the second gap when the cooling liquid in the holder 30 flows in the holder 30 for some reason. This merging enables the temperature and the like of the cooling liquid to be further equalized.

A protrusion (fixing portion 52) protruding in a direction orthogonal to the front-rear direction may be provided in the second gap. This protrusion makes it easy to generate convection near this protrusion due to collision of the cooling liquid flowing in the second gap with this protrusion. This convection induces the equalization of the temperature of the cooling liquid in the second gap. In addition, this protrusion as the fixing portion 52 may be used as a fixing point between the holder 30 and the case 40 or a fixing point between the upper holder 31 and the lower holder 32. In this case, the protrusion which is the fixing portion 52 may have a bottomed cylindrical shape. The fastening may be performed at a bottom of this protrusion.

In the example illustrated in FIG. 6, the first power storage device group 100 and the second power storage device group 110 which include a plurality of the power storage devices 10 and are different from each other in arrangement of the power storage devices 10 are arranged in the holder 30. Each of the first power storage device group 100 and the second power storage device group 110 includes 20 power storage devices 10 as an example.

In the first power storage device group 100, 20 power storage devices 10 are arranged in pairs at an interval in the left-right direction to form a zigzag. In addition, in the first power storage device group 100, an interval in the left-right direction between the power storage devices 10 arranged on the center portion side in the left-right direction is set to be larger than an interval in the left-right direction between the power storage devices 10 arranged on the outer side in the left-right direction. That is, the cooling liquid 50 flows in the center portion side of the first power storage device group 100 in the left-right direction more easily than in the outer side in the left-right direction. In the battery pack in which all of the intervals between the power storage devices 10 are equalized, when the cooling liquid 50 flows in the front-rear direction to supply the cooling liquid 50 into the case 40, the cooling liquid 50 is more unlikely to flow in the gap around the power storage devices 10 separated from the first opening portion 37 in the left-right direction than in the gap around the power storage devices 10 close to the first opening portion 37 in the left-right direction. However, when the interval around the power storage devices 10 arranged on the outer side in the left-right direction is set to be larger than the interval around the power storage devices 10 on the center side in the left-right direction as described above, the filling amount of the cooling liquid 50 can be equalized among the power storage devices 10.

In the second power storage device group 110, 20 power storage devices 10 are arranged in pairs at an interval in the left-right direction to form a zigzag, similarly to the first power storage device group 100. On the other hand, in the second power storage device group 110, an interval in the left-right direction between the power storage devices 10 arranged on the center portion side in the left-right direction is set to be smaller than an interval in the left-right direction between the power storage devices 10 arranged on the outer side in the left-right direction. That is, in the second power storage device group 110, an interval in the left-right direction between the power storage devices 10 arranged on the outer side in the left-right direction is set to be larger than an interval in the left-right direction between the power storage devices 10 arranged on the center portion side in the left-right direction. That is, the cooling liquid 50 flows in the outer side of the second power storage device group 110 in the left-right direction more easily than in the center portion side in the left-right direction. This configuration enables the filling amount of the cooling liquid to be further equalized among the power storage devices.

When the first power storage device group 100 and the second power storage device group 110 which are different from each other in arrangement of the power storage devices 10 are arranged in the holder 30, it becomes easy to form the meandering flow path of the cooling liquid 50 in the holder 30. As a result, the cooling liquid 50 can easily flow over the entirety of the inside of the holder 30, and a heat exchange amount between the cooling liquid 50 and the power storage devices 10 increases, so that the power storage devices 10 can be efficiently cooled.

In the example illustrated in FIG. 6, the first power storage device group 100 and the second power storage device group 110 are alternately arranged in the front-rear directions. This makes it easy to form a further meandering flow path of the cooling liquid 50 in the holder 30. As a result, the cooling liquid 50 can easily flows over the entirety of the inside of the holder 30, and a heat exchange amount between the cooling liquid 50 and the power storage devices 10 increases, so that the power storage devices 10 can be efficiently cooled.

As illustrated in FIG. 6, the holder 30 is arranged substantially in the center portion of the inside of the case 40, and an outer peripheral housing chamber 49 that houses the cooling liquid 50 is provided outside the holder 30. That is, the outer peripheral housing chamber 49 is a space between the holder 30 and the case 40. The cooling liquid 50 having flowed out of the second opening portion 38 provided in the holder 30 flows into the outer peripheral housing chamber 49. When the outer peripheral housing chamber 49 is provided, heat is exchanged between the power storage devices 10 and the cooling liquid that are arranged on the outer peripheral side of the holder 30 and the cooling liquid 50 in the outer peripheral housing chamber 49, which makes it easy to cool the power storage devices 10 arranged on the outer peripheral side of the holder 30. In a case where the upper current collecting plate 60 and the lower current collecting plate 61 are connected on the side surface of the holder 30, the power storage devices 10 can be cooled by the cooling liquid in the outer peripheral housing chamber 49 via each current collecting plate. In addition, all of the power storage devices 10 among the plurality of power storage devices 10 in the holder 30 need not be housed inside the side wall partitioning between the outer peripheral housing chamber 49 and the inside of the holder 30, and therefore, some of the plurality of power storage devices 10 may be arranged outside the side wall and these power storage devices 10 may be arranged in the outer peripheral housing chamber 49. That is, the power storage devices 10 arranged outside the side wall may directly contact the cooling liquid 50 in the outer peripheral housing chamber 49. Note that the side wall need not completely prevent the cooling liquid 50 from flowing between the inside of the holder and the outer peripheral housing chamber 49 via the side wall. A little cooling liquid 50 may move from cuts in the side wall.

As illustrated in FIG. 6, the first opening portion 37 that allows the cooling liquid 50 to flow into the holder 30 is provided in the center portion of the front surface 30a of the holder 30 in the left-right direction. Two second opening portions 38 that allow the cooling liquid 50 in the holder 30 to flow out to the outside of the holder 30 are provided in the rear surface 30b of the holder 30. The first opening portion 37 and the second opening portions 38 are arranged to be shifted from each other in the left-right direction. Specifically, the first opening portion 37 is provided in the center portion of the front surface 30a in the left-right direction, and the second opening portions 38 are provided on both end sides of the rear surface 30b in the left-right direction.

The first opening portion 37 and the second opening portions 38 allow the cooling liquid 50 having flowed into the holder 30 through the first opening portion 37 to easily flow toward the outer peripheral side of the holder 30. That is, the cooling liquid flowing in the front-rear direction in the holder can easily move also in the left-right direction. This makes it easy to cool the power storage devices 10 arranged on the outer peripheral side of the holder 30 in addition to the power storage devices 10 arranged on the center portion side of the holder 30. In other words, if the second opening portion 38 is provided only in the center portion side of the rear surface 30b in the left-right direction, the cooling liquid 50 is unlikely to flow in the outer peripheral side of the holder 30, which may make it difficult to efficiently cool the power storage devices 10 arranged on the outer peripheral side of the holder 30.

In the present embodiment, as an example, when a length of the rear surface 30b in the left-right direction in a top view is defined as L, the second opening portions 38 are provided only within a range of 0.3L from both ends of the rear surface 30b in the left-right direction and are not provided in the center portion side of the rear surface 30b in the left-right direction. Accordingly, the cooling liquid 50 flows more easily in the outer peripheral side of the holder 30 in the holder 30, so that the power storage devices 10 arranged on the outer peripheral side of the holder 30 can be further cooled.

In the present embodiment, the second opening portion 38 has a substantially rectangular shape in a plan view of the rear surface 30b which is a part of the side wall of the holder 30. As an example, the rear surface 30b is formed into a wave shape by combining a plurality of curved plates, is formed on an end side of each curved surface in the left-right direction, and is formed except for a center side of each curved surface in the left-right direction. With this configuration, the cooling liquid can flow in a wider area when flowing in a gap which is a part of the outer peripheral housing chamber 49 between the rear surface 30b and the case 40.

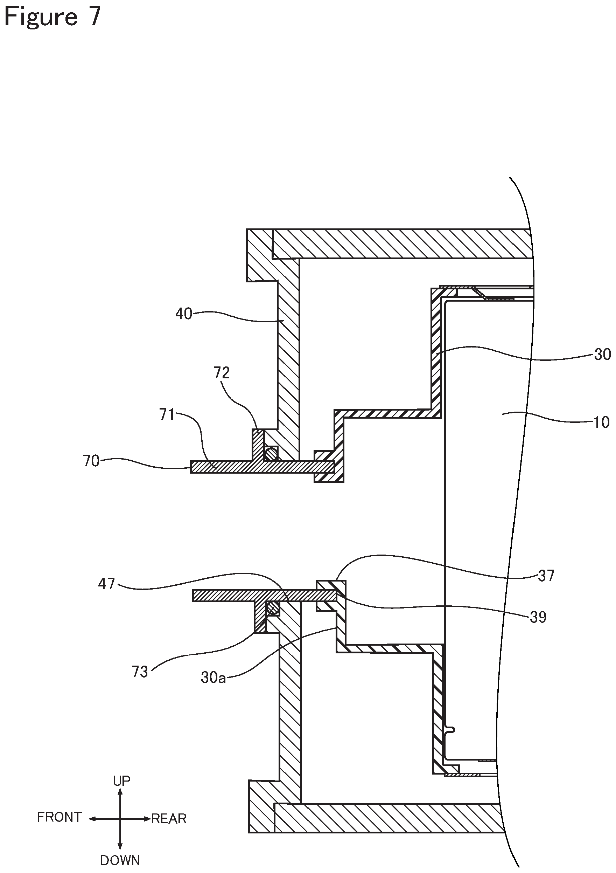

Next, the coupling portion 70 will be described further with reference to FIG. 7. FIG. 7 is a sectional view (sectional view in the front-rear direction of the center portion in the left-right direction) taken along a line C-C in FIG. 1, and illustrates an enlarged view of the vicinity of the coupling portion 70.

As illustrated in FIGS. 2 and 7, the coupling portion 70 is a member that has a substantially cylindrical shape and couples the first opening portion 37 and the inflow portion 47. By providing the coupling portion 70, the cooling liquid 50 having flowed in from the inflow portion 47 flows directly into the holder 30 through the first opening portion 37. This makes it possible to reduce filling of the cooling liquid in a gap between the holder 30 and the case 40 more preferentially than in gaps in the holder 30 and to increase an amount of the cooling liquid 50 flowing into the holder 30, so that the power storage devices 10 in the holder 30 can be efficiently cooled. This effect is especially effective when the gap between the power storage devices 10 adjacent to each other is especially smaller than the gap between the holder 30 and the case 40. The holder 30 may be provided with the side wall by which the power storage devices 10 are housed and which partitions between the inside and outside of the holder 30. The side wall need not be necessarily liquid-tight. It is preferable that the pressure loss is higher than the gap between power storage devices 10. When the holder 30 is divided into the upper holder 31 and the lower holder 32, the side wall of the upper holder 31 and the side wall of the lower holder 32 may be arranged side by side to form one side wall having one surface.

The coupling portion 70 is made of, for example, a metal material including iron, aluminum, or the like or a resin material. As the resin material constituting the coupling portion 70, for example, the resin material constituting the holder 30 can be used.

The coupling portion 70 has a cylindrical portion 71 that is inserted into the inflow portion 47, and an outer peripheral portion 72 formed on the outer periphery of the cylindrical portion 71. The cylindrical portion 71 has a cylindrical shape extending along the front-rear direction, in which both ends thereof are opened. The outer peripheral portion 72 has a substantially rectangular shape in a plan view of the front surface 40a of the case 40, and is formed over the entire periphery of the cylindrical portion 71. In addition, the outer peripheral portion 72 contacts an outer surface of the case 40, and is fixed to the case 40 by screws (not illustrated) or the like. That is, the outer peripheral portion 72 is a portion for fixing the coupling portion 70 to the case 40. However, a method of fixing the outer peripheral portion 72 to the case 40 is not limited thereto, and, for example, the outer peripheral portion 72 may be fixed to the case 40 by an adhesive or the like. A seal member 73 such as an O-ring is provided between the outer peripheral portion 72 and the case 40 to improve the sealability inside the case 40.

As illustrated in FIG. 7, a rear end of the cylindrical portion 71 is fitted into a recessed portion 39 provided in the front surface 30a of the holder 30. The recessed portion 39 is annularly formed, and holds the cylindrical portion 71 over the entire periphery. The recessed portion 39 may have any shape that can hold the cylindrical portion 71, and has, for example, a depth (length in the front-rear direction) of greater than or equal to 1 mm and less than or equal to 20 mm. However, the recessed portion 39 may have a configuration in which a part of the outer periphery of the cylindrical portion 71 is fitted thereinto.

When the coupling portion 70 is fitted into the recessed portion 39, high pressure loss in the region between the coupling portion 70 and the recessed portion 39 makes it possible to achieve the connection between the coupling portion 70 and the first opening portion 37 to be achieved with a simple configuration. In other words, when the recessed portion 39 is not provided, a component for connecting the coupling portion 70 and the holder 30 is required, and a seal member for ensuring the sealing performance of the connection portion may be further required. It is preferable that the number of components constituting the battery pack 1 is small in terms of reducing an increase in manufacturing cost and improving the workability in a connection step. In the present embodiment, the recessed portion 39 is provided near the first opening portion 37. However, the recessed portion is formed near the inflow port of the case 40, and therefore, a part of the coupling portion 70 may be fitted into the recessed portion.

In the present embodiment, the coupling portion 70 may be constituted of a different member from the holder 30 and the case 40, but the coupling portion 70 may be formed integrally with the holder 30 and the case 40.

As described above, the battery pack 1 of the present embodiment comprises the coupling portion 70 that couples the inflow portion 47 provided in the case 40 and the first opening portion 37 provided in the holder 30. This makes it possible to increase the amount of the cooling liquid 50 flowing into the holder 30, so that the power storage devices 10 in the holder 30 can be efficiently cooled. As a result, the reliability of the battery pack 1 can be improved.

In addition, the battery pack 1 of the present embodiment comprises the coupling portion 70 that couples the inflow portion 47 provided in the case 40 and the first opening portion 37 provided in the holder 30. The coupling portion 70 is held by the recessed portion 39 provided in the front surface 30a of the holder 30. This makes it possible to increase the amount of the cooling liquid 50 flowing into the holder 30 without increasing the number of components, so that the power storage devices 10 in the holder 30 can be efficiently cooled. As a result, the reliability of the battery pack 1 can be improved.

The present disclosure is not limited to the above embodiment, and various improvements and changes are possible within the matters described in the claims of the present application and the scope of equivalence of the claims. For example, in the above embodiment, the battery pack 1 is provided with the outer peripheral housing chamber 49 that houses the cooling liquid 50 in the outer peripheral portion of the holder 30, but need not be provided with the outer peripheral housing chamber 49.

In the above embodiment, the power storage device 10 is arranged so that the sealing assembly 16 is located on the lower side, but the power storage device 10 may be arranged so that the sealing assembly 16 is located on the upper side, that is, the bottom 15a of the housing can 15 is located on the lower side.

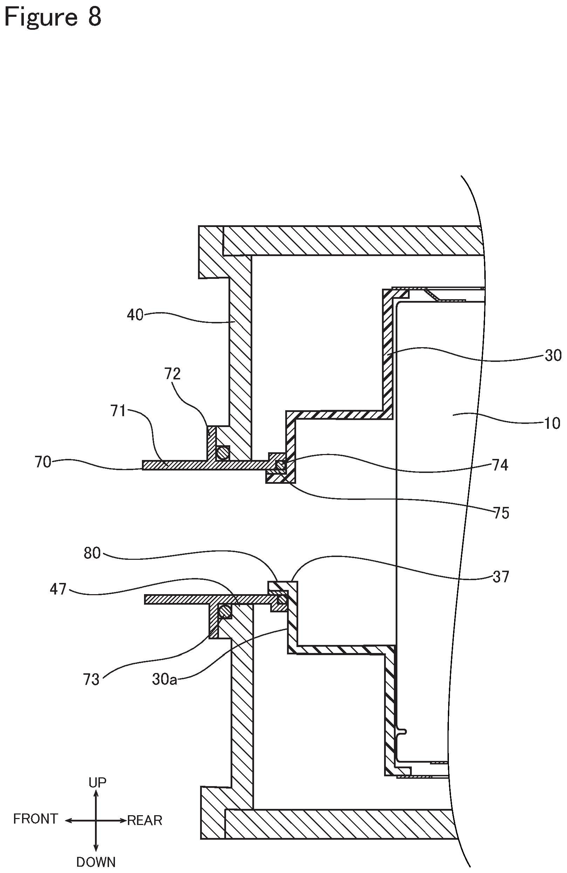

In addition, in the above embodiment, the coupling portion 70 is held by the recessed portion 39 provided in the front surface 30a of the holder 30 to be joined to the holder 30, but the method of joining the coupling portion 70 and the holder 30 is not limited thereto. For example, as illustrated in FIG. 8, a protrusion 80 protruding forward may be provided on a peripheral edge of the first opening portion 37 so that an outer peripheral surface of the protrusion 80 and an inner peripheral surface of the coupling portion 70 (cylindrical portion 71) are joined. An inner peripheral surface of the protrusion 80 and an outer peripheral surface of the coupling portion 70 may be joined. The seal member 74 such as an O-ring may be provided between the coupling portion 70 and the holder 30 to improve the sealability inside the coupling portion 70. A cylindrical restraining ring 75 may be provided between the seal member 74 and the protrusion 80. With this configuration, the more liquid-tight sealing can be achieved by increasing the contact area as compared with a configuration in which the sealing is performed by bringing the O-ring directly in contact with the protrusion 80. The adhesive may be interposed between the restraining ring 75 and the protrusion 80. The effect of the restraining ring 75 is especially effective when the first opening portion 37 is formed by combining two cutouts in the upper holder 31 and the lower holder 32 (a first cutout in the upper holder 31 and a second cutout in the lower holder 32). When the cylindrical protrusion is formed by combining the protrusion 80 near the first cutout and a protrusion near the second cutout, a joint between the protrusions can be easily covered with the restraining ring 75. In an opening in a holder-side end portion of the coupling portion 70, the inner peripheral surface thereof may be arranged outside the O-ring, and the O-ring may be pressed inward. Accordingly, the reliability of the sealing by the O-ring can be enhanced.

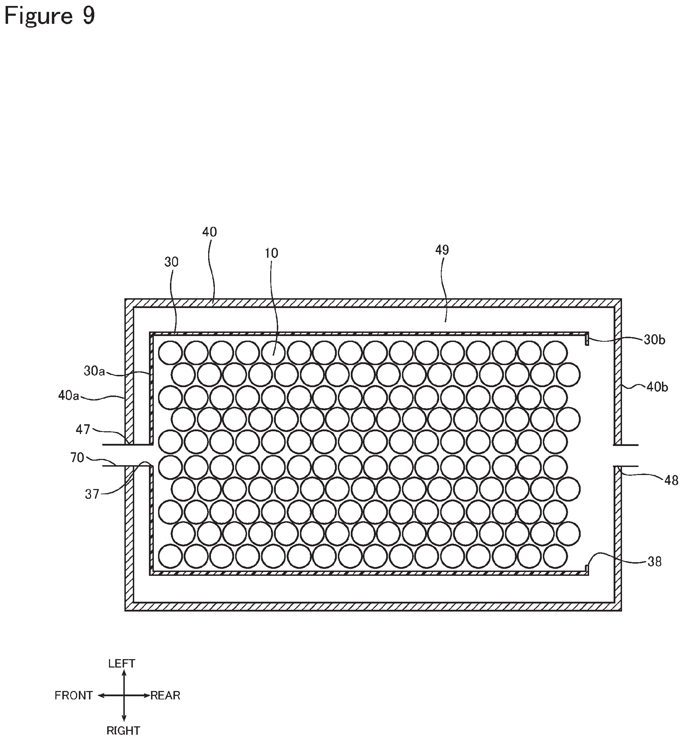

In the above embodiment, the power storage devices 10 are arranged at a predetermined interval, but the arrangement of the power storage devices 10 is not limited thereto. For example, as illustrated in FIG. 9, the power storage devices 10 may be arranged so that the intervals between the power storage devices 10 in the left-right direction are substantially the same. In the example in FIG. 9, the power storage devices 10 are arranged periodically on the triangular lattice points. In this case, the battery pack 1 can be easily miniaturized. Alternatively, the power storage devices 10 are arranged periodically on the square lattice points.

In the above embodiment, the second opening portion 38 is not provided on the center portion side of the rear surface 30b of the holder 30 in the left-right direction, but the arrangement of the second opening portion 38 is not limited thereto. For example, as illustrated in FIG. 9, the second opening portion 38 may be provided in the region on the center portion side of the rear surface 30b of the holder 30 in the left-right direction in addition to the region on the outer side of the rear surface 30b of the holder 30 in the left-right direction. The second opening portion 38 may be provided only in the region on the center portion side of the rear surface 30b of the holder 30 in the left-right direction.

The present disclosure is further described by the following embodiments.

### Configuration 1:

A power storage module, comprising: a plurality of power storage devices; a holder that holds the plurality of the power storage devices; a cooling liquid in which the plurality of the power storage devices in the holder are immersed; and a case that has an inflow portion allowing the cooling liquid to flow in from an outside and houses the holder.

### Configuration 2:

The power storage module described in Configuration 1, wherein the holder has an opening portion that is provided at a position facing the inflow portion and allows the cooling liquid to flow into the holder, and further comprises a coupling portion that couples the inflow portion and the opening portion.

### Configuration 3:

The power storage module described in Configuration 1 or 2, wherein the coupling portion has a cylindrical portion that is inserted into the inflow portion, and an outer peripheral portion that is formed on an outer peripheral surface of the cylindrical portion.

### Configuration 4:

The power storage module described in Configuration 3, wherein at least a part of the outer peripheral portion contacts an outer surface of the case.

### Configuration 5:

The power storage module described in Configuration 3 or 4, wherein a seal member is provided between the outer peripheral portion and an outer surface of the case.

### Configuration 6:

The power storage module described in any one of Configurations 1 to 5, wherein the case comprises an outflow portion that allows the cooling liquid to flow out to an outside.

### Configuration 7:

The power storage module described in Configuration 6, wherein the opening portion is a first opening portion, a second opening portion is provided on a side of the outflow portion separately from the first opening portion, and the second opening portion causes a space in the holder to communicate with a space in the case.

### Configuration 8:

The power storage module described in any one of Configurations 1 to 7, wherein the holder has a side wall that partitions between an inside of the holder and the holder in the case.

### Configuration 9:

The power storage module described in any one of Configurations 1 to 8, wherein an interval between a pair of the power storage devices adjacent to each other in the plurality of the power storage devices is smaller than an interval between the holder and the case.

### Configuration 10:

The power storage module described in any one of Configurations 1 to 9, wherein the holder includes an upper holder that houses one end portion of each power storage device of the plurality of the power storage devices and a lower holder that holds the other end portion of the power storage device, and the opening portion is formed by arranging a first cutout formed in the upper holder and a second cutout formed in the lower holder side by side.

### Configuration 11:

The power storage module described in Configuration 10, wherein inflow walls are formed in respective edges of the first cutout and the second cutout, an inflow cylindrical portion in the opening portion is formed by arranging the inflow walls side by side, and the opening portion further has a cylindrical restraining ring surrounding an outer peripheral surface of the inflow cylindrical portion and an O-ring surrounding an outer peripheral surface of the restraining ring.

### Configuration 12:

The power storage module described in Configuration 1, wherein the holder has an opening portion that is provided at a position facing the inflow portion and allows the cooling liquid to flow into the holder, and further comprises a coupling portion that couples the inflow portion and the opening portion, and the coupling portion is held by a recessed portion provided in the holder.

### Configuration 13:

The power storage module described in Configuration 12, wherein the coupling portion has a cylindrical portion that is inserted into the inflow portion, and an outer peripheral portion that is formed on an outer periphery of the cylindrical portion.

### Configuration 14:

The power storage module described in Configuration 13, wherein the outer peripheral portion contacts an outer surface of the case.

### Configuration 15:

The power storage module described in any one of Configurations 12 to 14, wherein the recessed portion is annularly provided.

### REFERENCE SIGNS LIST

1 Battery pack, 10 Power storage device, 11 Positive electrode, 12 Negative electrode, 13 Separator, 14 Electrode assembly, 15 Housing can, 15a Bottom, 15b Side surface portion, 15c Grooved portion, 15d Opening portion, 16 Sealing assembly, 17 Gasket, 18, 19 Insulating plate, 20 Positive electrode lead, 21 Negative electrode lead, 30 Holder, 30a Front surface, 30b Rear surface, 31 Upper holder, 32 Lower holder, 33, 34 Battery holding portion, 35, 36 Through hole, 37 First opening portion (opening portion), 38 Second opening portion, 39 Recessed portion, 40 Case, 40a Front surface, 40b Rear surface, 41 Main wall, 42, 43, 44, 45 Side wall, 46 Upper lid, 47 Inflow portion, 48 Outflow portion, 49 Outer peripheral housing chamber, 50 Cooling liquid, 51 Rib, 52 Fixing portion, 60 Upper current collecting plate, 61 Lower current collecting plate, 62, 63 Lead, 70 Coupling portion, 71 Cylindrical portion, 72 Outer peripheral portion, 73, 74 Seal member, 75 Restraining ring, 80 Protrusion, 100 First power storage device group, 110 Second power storage device group

## Claims

1. A power storage module, comprising:
a plurality of power storage devices;
a holder that holds the plurality of the power storage devices;
a cooling liquid in which the plurality of the power storage devices in the holder are immersed; and
a case that has an inflow portion allowing the cooling liquid to flow in from an outside and houses the holder.

2. The power storage module according to claim 1, wherein
the holder has an opening portion that is provided at a position facing the inflow portion and allows the cooling liquid to flow into the holder, and
further comprises a coupling portion that couples the inflow portion and the opening portion.

3. The power storage module according to claim 2, wherein
the coupling portion has
a cylindrical portion that is inserted into the inflow portion, and
an outer peripheral portion that is formed on an outer peripheral surface of the cylindrical portion.

4. The power storage module according to claim 3, wherein
at least a part of the outer peripheral portion contacts an outer surface of the case.

5. The power storage module according to claim 3, wherein
a seal member is provided between the outer peripheral portion and an outer surface of the case.

6. The power storage module according to claim 2, wherein
the case comprises an outflow portion that allows the cooling liquid to flow out to an outside.

7. The power storage module according to claim 6, wherein
the opening portion is a first opening portion, a second opening portion is provided on a side of the outflow portion separately from the first opening portion, and
the second opening portion causes a space in the holder to communicate with a space in the case.

8. The power storage module according to claim 2, wherein
the holder has a side wall that partitions between an inside of the holder and an outside of the holder in the case.

9. The power storage module according to claim 2, wherein
an interval between a pair of the power storage devices adjacent to each other in the plurality of the power storage devices is smaller than an interval between the holder and the case.

10. The power storage module according to claim 2, wherein
the holder includes an upper holder that houses one end portion of each power storage device of the plurality of the power storage devices and a lower holder that holds the other end portion of the power storage device, and
the opening portion is formed by arranging a first cutout formed in the upper holder and a second cutout formed in the lower holder side by side.

11. The power storage module according to claim 10, wherein
inflow walls are formed in respective edges of the first cutout and the second cutout,
an inflow cylindrical portion in the opening portion is formed by arranging the inflow walls side by side, and
the opening portion further has a cylindrical restraining ring surrounding an outer peripheral surface of the inflow cylindrical portion and an O-ring surrounding an outer peripheral surface of the restraining ring.

12. The power storage module according to claim 1, wherein
the holder has an opening portion that is provided at a position facing the inflow portion and allows the cooling liquid to flow into the holder, and
further comprises a coupling portion that couples the inflow portion and the opening portion, and
the coupling portion is held by a recessed portion provided in the holder.

13. The power storage module according to claim 12, wherein
the coupling portion has
a cylindrical portion that is inserted into the inflow portion, and
an outer peripheral portion that is formed on an outer periphery of the cylindrical portion.

14. The power storage module according to claim 13, wherein
the outer peripheral portion contacts an outer surface of the case.

15. The power storage module according to claim 12, wherein
the recessed portion is annularly provided.
